# FASCICULE DE BREVET EUROPEEN

(11) **EP 3 722 469 B1**
(45) Date de publication et mention de la délivrance du brevet: **05.01.2022**
(21) Numéro de dépôt: 20165764.0
(22) Date de dépôt: 26.03.2020
(51) Int. Cl.: D03C 3/24, F16C 7/02, F16C 11/04, F16C 33/10, F16C 33/74

(54) **BIELLETTE DE LIAISON ET MÉCANIQUE JACQUARD COMPRENANT UNE TELLE BIELLETTE**
VERBINDUNGSGESTÄNGE UND JACQUARD-VORRICHTUNG, DIE EIN SOLCHES SCHALTGESTÄNGE UMFASST
CONNECTING ROD AND JACQUARD MECHANISM COMPRISING SUCH A CONNECTING ROD

(30) Priorité: 03.04.2019 FR 1903573
(43) Date de publication de la demande: 14.10.2020
(73) Titulaire: STAUBLI LYON, 69680 Chassieu (FR)
(72) Inventeur: PRZYTARSKI, Patrice, 69970 CHAPONNAY (FR); BUCHET, Baptiste, 69330 MEYZIEU (FR)
(74) Mandataire: Lavoix

(56) Documents cités:
- CN-A- 104 214 197
- CN-B- 105 113 085
- CN-Y- 201 268 758

## Description

La présente invention a trait à une biellette de liaison entre une lame et une barre d'entraînement appartenant à une mécanique Jacquard.

Le domaine de l'invention est celui des mécanismes de transmission de mouvement permettant de créer la foule sur un métier à tisser de type Jacquard.

Il est connu, par exemple de CN-B-105113085, d'utiliser des bielles dans une mécanique Jacquard.

Dans une mécanique Jacquard, un mécanisme est utilisé pour transformer un mouvement de rotation d'un arbre d'entrée en un mouvement de translation alternatif en opposition de phase de deux séries de lames, également dénommées couteaux, qui supportent les crochets reliés à un harnais Jacquard. Lorsqu'une lame est en position haute, les deux lames qui lui sont adjacentes sont en position basse. Ces lames assurent le déplacement vertical des crochets qui sont disposées en rangées, ces crochets pouvant être immobilisés par un dispositif de sélection comprenant, par exemple un électro-aimant. Les crochets de deux lames adjacentes sont reliés deux à deux par un cordon et un système à poulie permet de transmettre le mouvement de chaque paire de crochets à une lisse traversée par un fil de chaîne. Ceci permet de créer la foule sur un métier à tisser pour le passage d'un fil de trame. Les crochets, les cordons et des poulies associées peuvent faire partie d'un module Jacquard connu, par exemple, de EP-A-1 413 657.

Au sein d'une mécanique Jacquard, le mécanisme de transformation du mouvement comprend au moins deux barres d'entraînement, également dénommées barres obliques, qui sont animées d'un mouvement alternatif en opposition de phase, chacune de ces barres obliques étant reliée à une série de lames guidées, dans leur mouvement alternatif vertical, par un bâti fixe de la mécanique Jacquard. Les lames d'une série de lames sont reliées à une barre d'entraînement par l'intermédiaire de biellettes. En pratique, comme montré par exemple dans CN-Y-201268758, deux barres d'entraînement sont disposées de chaque côté de la mécanique Jacquard et une biellette est disposée à chacune des extrémités longitudinales de chaque lame pour suspendre cette lame à deux barres d'entraînement animées d'un même mouvement. Une biellette est articulée par une liaison pivot parallèle à la direction longitudinale des lames par rapport à chaque barre d'entraînement.

Du fait du mouvement de rotation alternatif limité des barres d'entraînement, la liaison pivot entre une biellette et chacune de ces barres est sollicitée sur un secteur angulaire réduit. Pour éviter un échauffement qui conduirait à une dégradation de ces pièces, il est connu de recourir à des géométries élaborées et à des matériaux de grande qualité, tels que de l'aluminium. Une telle construction est onéreuse. Dans les autres cas, il est nécessaire de lubrifier régulièrement l'articulation, au niveau de la liaison pivot, ce qui impose des opérations de maintenance nécessitant une mise à l'arrêt du métier à tisser et une main d'oeuvre qualifiée. Cette approche est coûteuse en temps de production et en frais de personnel.

Le document CN-A-104214197 divulgue une biellette de liaison entre des éléments menant et mené, qui comprend deux moyeux, dont un côté est équipée d'une gorge annulaire de réception d'un joint d'étanchéité.

La présente invention vise à résoudre ces problèmes en proposant une nouvelle biellette de construction simple et économique pour laquelle la maintenance de l'articulation biellette/barre d'entraînement est réduite, voire supprimée.

A cet effet, l'invention concerne une biellette de liaison entre une lame de support de crochets mobiles et une barre d'entraînement d'une mécanique Jacquard, cette biellette comprenant un corps pourvu d'au moins un logement traversant pour la réception d'un arbre de palier avec possibilité de pivotement relatif autour d'un axe central du logement traversant, alors que le logement traversant s'étend, le long de son axe central, entre une première extrémité axiale et une deuxième extrémité axiale. Conformément à l'invention, le corps de la biellette porte un premier joint d'étanchéité au niveau de la première extrémité axiale du logement traversant et un deuxième joint d'étanchéité au niveau de la deuxième extrémité axiale du même logement traversant.

Grâce à l'invention, les deux joints d'étanchéité prévus aux deux extrémités axiales du logement traversant permettent de fermer, de façon étanche, un volume défini entre le corps de la biellette et un arbre de palier lorsque celui-ci est en place dans le logement traversant, ce qui maintient en place un lubrifiant, à l'interface entre la biellette et l'arbre de palier. Une lubrification efficace et de longue durée est ainsi possible, sans avoir recours à des opérations de maintenance régulières. En outre, les deux joints empêchent la pollution extérieure de pénétrer dans le logement traversant, autour de l'arbre de palier, ce qui réduit les risques de contamination du lubrifiant et les risques d'usure des pièces constitutives de l'articulation.

Selon des aspects avantageux mais non obligatoires de l'invention, une telle biellette peut incorporer une ou plusieurs des caractéristiques suivantes, prises selon toute combinaison techniquement admissible :
- Le corps de la biellette est en matériau polymère, de préférence en matériau thermoplastique.
- Chaque joint d'étanchéité est surmoulé sur, ou monobloc avec, le corps de la biellette.
- Chaque joint d'étanchéité comprend au moins une lèvre, alors que, à l'état libre du joint d'étanchéité porté par le corps de la biellette, la lèvre dépasse radialement en direction de l'axe central par rapport à une surface radiale interne du logement traversant. L'état libre du joint d'étanchéité est l'état de ce joint en l'absence d'arbre de palier monté dans le logement traversant.
- Chaque joint d'étanchéité présente, à l'état libre porté par le corps de la biellette, un diamètre interne minimal inférieur au diamètre interne du logement traversant.
- Au moins une rainure de réception d'un lubrifiant, de préférence trois rainures axiales régulièrement réparties autour de l'axe central du logement traversant, sont ménagées dans le corps sur une surface radiale interne du logement traversant.
- Chaque joint d'étanchéité est reçu dans une chambre ménagée dans le corps de la biellette, autour du logement traversant, et qui débouche radialement à l'axe central, dans le logement traversant et, axialement, sur un côté de ce corps sur toute l'épaisseur radiale de la chambre.
- Selon l'axe central, la longueur du joint d'étanchéité est strictement inférieure à la longueur de la chambre.
- Plusieurs cavités sont ménagées sur chaque côté du corps de la biellette perpendiculaire à l'axe central du logement traversant et réparties autour du logement traversant.
- Le corps de la biellette est pourvu de deux logements traversants de réception chacun d'un arbre de palier et dont les axes centraux sont parallèles, un logement traversant étant ménagé à chaque extrémité longitudinale du corps de la biellette, ce corps étant symétrique par rapport à un plan médian qui est situé à égale distance des deux axes centraux et qui est perpendiculaire à un plan longitudinal incluant ces deux axes centraux.
- Le corps de la biellette définit un passage s'étendant depuis le logement traversant jusqu'à une zone externe du corps de la biellette, ce passage débouchant dans le logement traversant, transversalement à son axe central au niveau d'une surface radiale interne du logement traversant disposée axialement entre les deux joints d'étanchéité.

Selon un autre aspect, l'invention concerne une mécanique Jacquard comprenant des barres d'entraînement et des lames de support de crochets mobiles appartenant également à la mécanique Jacquard, les lames étant liées aux barres d'entraînement par des biellettes, dont l'une au moins est telle que définie ci-dessus, alors que chaque logement traversant de la biellette reçoit un arbre de palier solidaire d'une pièce parmi une barre d'entraînement et une lame, cette pièce comprenant deux flasques, alors que le logement traversant de la biellette est disposé entre ces deux flasques et alors que chaque joint d'étanchéité disposé au niveau de chaque extrémité axiale du logement traversant est interposé entre l'arbre de palier et le corps de la biellette.

Selon d'autres aspects avantageux de l'invention, une telle mécanique d'armure peut incorporer une ou plusieurs des caractéristiques suivantes, prises selon toute combinaison techniquement admissible :
- Au niveau de chaque logement traversant, un volume fermé de lubrifiant est délimité axialement entre les deux joints d'étanchéité et radialement entre une surface radiale interne du logement traversant et une surface radiale externe de l'arbre de palier.
- Une surface radiale externe de l'arbre de palier est pourvue d'au moins une gorge de réception d'un lubrifiant disposée axialement entre les deux joints d'étanchéité.
- Plusieurs cavités sont ménagées sur chaque côté du corps de la biellette perpendiculaire à l'axe central du logement traversant et réparties autour du logement traversant et les flasques recouvrent les cavités.

L'invention sera mieux comprise et d'autres avantages de celle-ci apparaîtront plus clairement à la lumière de la description qui va suivre de deux modes de réalisation d'une biellette et d'une mécanique d'armure conformes à son principe, donnée uniquement à titre d'exemple et faite en référence aux dessins annexés dans lesquels :
[Fig 1] la figure 1 est une vue d'ensemble en perspective d'une mécanique Jacquard conforme à l'invention ;
[Fig 2] la figure 2 est une vue de face d'une biellette conforme à l'invention montée dans la mécanique Jacquard de la figure 1, dans la position correspondant au détail II sur cette figure ;
[Fig 3] la figure 3 est une coupe axiale selon la ligne III-III à la figure 2 ;
[Fig 4] la figure 4 est une vue à plus grande échelle du détail IV à la figure 3 ;

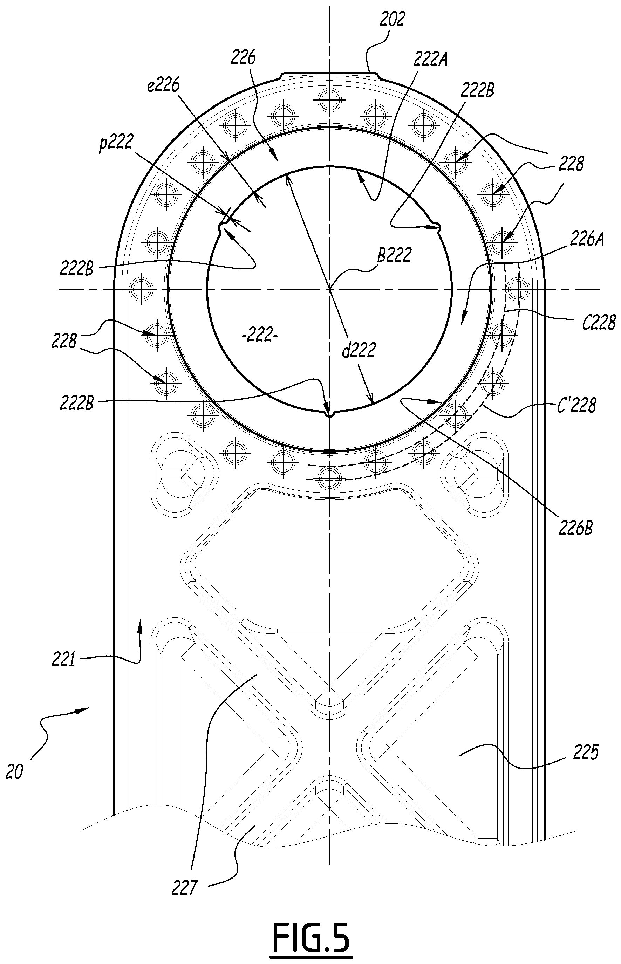

[Fig 5] la figure 5 est une vue partielle, de côté et également à plus grande échelle, du corps de la biellette des figures 2 à 4 ;
[Fig 6] la figure 6 est une vue de face d'une biellette conforme à un deuxième mode de réalisation de l'invention, cette biellette étant représentée, avant montage sur une barre d'entraînement, articulée sur une lame elle-même représentée partiellement et ;
[Fig 7] la figure 7 est une coupe selon la ligne VII-VII à la figure 6.

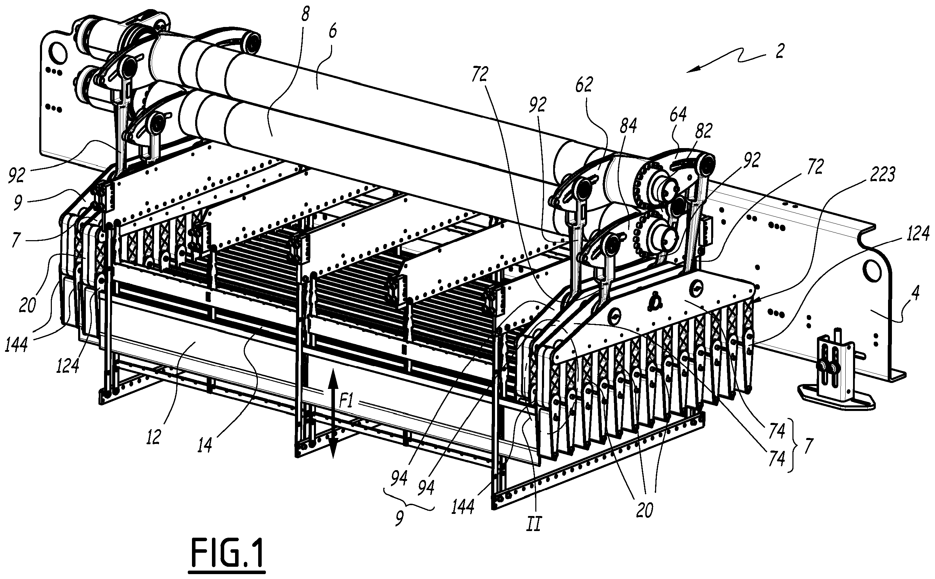

La mécanique Jacquard 2 représentée à la figure 1 comprend un bâti 4 partiellement représenté sur cette figure par une plaque latérale et qui comprend également des platines non représentées supportant un arbre oscillant supérieur 6 et un arbre oscillant inférieur 8 disposés en parallèle et l'un au-dessus de l'autre. A chaque extrémité, l'arbre oscillant supérieur 6 est équipé de deux leviers basculants 62 et 64. De même, à chaque extrémité, l'arbre oscillant inférieur 8 est équipé de deux leviers basculants 82 et 84.

Les leviers basculants 64 et 84 sont reliés par deux bielles de liaisons 72 à une barre d'entraînement 7. Une telle barre d'entraînement est parfois qualifiée de « barre oblique ». Plus précisément, la barre d'entraînement 7 est suspendue aux leviers basculants 64 et 84 par les bielles 72.

De la même façon, une autre barre d'entraînement 9 ou « barre oblique » est suspendue aux leviers basculants 62 et 82 par des bielles de liaison 92.

Il est ainsi prévu deux barres obliques d'entraînement 7 et 9 de chaque côté de la mécanique Jacquard 2, approximativement en-dessous des extrémités des arbres oscillants 6 et 8.

La position des points d'articulation des bielles de liaison 72 et 92 sur les bras oscillants 62, 64, 82 et 84 est réglable, dans des encoches en arc de cercle prévues sur ces bras.

Chaque barre d'entraînement 7 est formé de deux flasques parallèles 74 entre lesquels sont articulées les bielles de liaison 72. De la même façon, chaque barre d'entraînement 9 est formée de deux flasques parallèles 94 entre lesquels sont articulées les bielles de liaison 92.

Un arbre d'entrée non représenté et une liaison cinématique adaptée, connus en soi, permettent d'entraîner les arbres oscillants en rotation autour de leurs axes longitudinaux respectifs.

Deux séries de lames 12 et 14 s'étendent selon une direction longitudinale parallèle à la direction longitudinale des arbres oscillants 6 et 8 et sont respectivement suspendues aux barres d'entraînement 7 et 8 qui s'étendent perpendiculairement à la direction longitudinale des lames 12, 14. Plus précisément, la série de lames 12 est liée aux deux barres d'entraînement 7 au moyen de biellettes 20, alors que la série de lames 14 est liée aux barres d'entraînement 9 au moyen de biellettes 20. Chaque barre d'entraînement 7, 9 est en liaison articulée de type pivot avec plusieurs biellettes 20. Chaque lame 12, 14 est en liaison articulée de type pivot avec deux biellettes 20.

Les deux séries de lames 12 et 14 sont ainsi déplacées, dans un mouvement alternatif de translation verticale représenté par la double flèche F1 à la figure 1 en étant suspendues aux barres d'entraînement 7 et 9 et guidées par des moyens de guidage non représentés supportés par le bâti 4.

Les lames 12 et 14 supportent des crochets mobiles non représentés, ces crochets faisant partie de la mécanique Jacquard 2 et pouvant être immobilisés par un dispositif de sélection comprenant, par exemple un électro-aimant, pour déterminer la position d'un fil de chaîne.

Chaque biellette 20 fait partie d'un mécanisme de transmission de mouvement de l'arbre d'entrée à une lame 12, 14.

Par la suite, on utilise le terme « longitudinal » pour une dimension ou une orientation parallèle à la plus grande dimension d'un objet.

Au voisinage de chacune de ses extrémités longitudinales, chaque lame 12 comprend deux flasques 124. En particulier, les deux flasques 124 d'une lame 12 forment l'extrémité longitudinale de cette lame et sont parallèles entre eux. De manière identique, chaque lame 14 est également équipée, au voisinage de chacune de ses extrémités, de deux flasques 144.

Les flasques 124, 144 s'étendent perpendiculairement à la direction longitudinale des lames 12, 14.

Chaque biellette 20 est insérée entre les deux flasques 74 et 94 d'une barre d'entraînement 7 ou 9 et deux des flasques 124 ou 144 d'une lame 12 ou 14.

Les biellettes 20 sont toutes identiques.

Dans ce qui suit, on décrit plus particulièrement le cas d'une biellette 20 suspendue à la barre d'entraînement 7 visible sur la droite de la figure 1 et supportant une lame 12 de la première série de lames. Cependant la description est transposable à une biellette 20 suspendue à une barre d'entraînement 9 et supportant une lame 14.

La biellette 20 comprend un corps 22 réalisé en matériau polymère, de préférence un matériau thermoplastique. A titre d'exemple, le corps 22 peut être réalisé par en polyamide 6-6. En variante, d'autres matériaux plastiques peuvent être utilisés, notamment le polyoxyde de méthylène. De préférence, le corps 22 est réalisé par injection du matériau polymère.

Le corps 22 de la biellette 20 s'étend selon un axe longitudinal A22 qui est globalement vertical en configuration d'utilisation de la biellette au sein de la mécanique Jacquard 2.

On note respectivement 202 et 204 les deux extrémités de la biellette 20, l'extrémité 202 étant située en partie haute et l'extrémité 204 étant située en partie basse en configuration montée de la biellette 20 au sein de la mécanique Jacquard 2.

Un premier logement traversant 222 est prévu dans le corps 22, à proximité de l'extrémité 202, alors qu'un deuxième logement traversant 224 est prévu dans ce même corps, à proximité de l'extrémité 204.

On note respectivement B222 et B224 les axes centraux des logements 222 et 224, ces axes centraux étant parallèles entre eux et perpendiculaires à l'axe A22. Les axes B222 et B224 sont des axes autour desquels la biellette 20 pivote par rapport à la barre 7, respectivement la lame 12.

Dans la suite, on utilise les termes « axial » ou « radial » en référence à l'un des axes B222 ou B224.

On note 221 et 223 les côtés du corps 22 perpendiculaires aux axes B222 et B224. Les côtés 221 et 223 s'étendent perpendiculairement à la direction longitudinale des lames 12 en configuration montée de la biellette 20 sur la lame 12. Les logements 222 et 224 débouchent sur les côtés 221 et 223 selon l'axe B222, respectivement B224.

L'axe A22 s'étend à mi-distance des côtés 221 et 223.

Les logements 222 et 224 sont de même géométrie. Dans ce qui suit, on décrit principalement le logement 222, étant précisé que cette description est transposable au logement 224.

Le logement 222 est cylindrique et est délimité par une surface radiale interne 222A formée sur le corps 22, traversée par l'axe A22, ayant une partie médiane cylindrique à section circulaire centrée sur l'axe B222. Trois rainures axiales 222B sont creusées dans le corps 22 et ménagées sur la partie médiane cylindrique de la surface 222A, en étant parallèles à l'axe B222. Ces rainures 222B sont régulièrement réparties, à 120°, autour de l'axe B122.

On note d222 le diamètre interne du logement traversant 222, c'est-à-dire le diamètre de la partie médiane cylindrique de la surface 222A qui correspond au diamètre minimal du logement 222.

On note 222C et 222D les deux extrémités axiales du logement 222 disposées de part et d'autre de l'axe A22.

Deux chambres 226 sont ménagées dans le corps 22, chacune à une extrémité axiale 222C ou 222D du logement 222. Chaque chambre 226 entoure le logement 222 et débouche radialement dans celui-ci, en direction de l'axe B222. Les rainures 222B débouchent axialement dans les chambres 226.

En outre, chaque chambre 226 débouche axialement, selon une direction opposée à l'autre chambre, vers l'extérieur de la biellette 20.

En d'autres termes, chaque chambre 226 présente une section en forme de L, avec une paroi annulaire 226A perpendiculaire à l'axe B222 et une paroi circulaire 226B de diamètre constant plus important que le diamètre d222, centrées sur l'axe B222. La paroi circulaire 226B de chaque chambre 226 s'étend depuis le côté 221, 223 adjacent jusqu'à la paroi annulaire 226A de la même chambre 226.

On note e226 l'épaisseur radiale d'une chambre 226, qui est définie par la différence de rayon entre la partie médiane cylindrique de la surface 222A et la paroi circulaire 226B.

On note p222 la profondeur radiale d'une rainure 222B.

L'épaisseur e226 est strictement supérieure à la profondeur p222.

Compte tenu de leur géométrie, les chambres 226 débouchent axialement dans les côtés 221 et 223 du corps 22 sur toute leur épaisseur radiale e226.

On note P22 un plan longitudinal de la biellette 20 contenant les axes A22, B222 et B224. On note P'22 un plan perpendiculaire au plan P22 et parallèle aux axes B222 et B224 et situé à mi-distance entre ces axes. Le plan P'22 est un plan médian de la biellette 20 et du corps 22.

On note C22 un point d'intersection entre l'axe A22 et le plan médian P'22.

La biellette 20 et le corps 22 sont symétriques par rapport au plan médian P'22 et par rapport au point C22.

Comme le corps de biellette 22 est symétrique par rapport au plan P'22, chacun des logements 222 et 224 peut être utilisé, indifféremment, pour l'articulation avec une barre d'entraînement, 7 ou 9, ou avec une lame, 12 ou 14.

Entre les logements 222 et 224, le corps 22 est pourvu d'une âme 225 plane et perpendiculaire aux plans P22 et P'22, ainsi que de nervures 227 disposées de part et d'autre de l'âme 225 et qui forment des croisillons. Selon une direction parallèle aux axes B222 et B224, l'âme 225 est bien moins épaisse que les logements traversants 222 et 224. Les nervures 227 sont disposées en regard, de part et d'autre de l'âme 225.

On note l'épaisseur e20 de la biellette 20 mesurée au niveau de l'âme 225, en tenant compte des nervures 227, parallèlement aux axes B222 et B224, entre les côtés 221 et 223.

On note L222 la longueur axiale du logement 222 mesurée parallèlement à l'axe B22, entre les côtés 221 et 223 du corps 22.

L'épaisseur e20 et la longueur axiale L222 sont égales.

Un joint d'étanchéité 24 est disposé dans chaque chambre 226. Ainsi le corps 22 de la biellette 20 porte un joint d'étanchéité 24 au niveau de chacune des deux extrémités axiales 222C, 222D du logement traversant 222. En d'autres termes, le corps 22 de la biellette porte un joint d'étanchéité 24 au niveau de l'extrémité axiale 222C du logement traversant 222 et un joint d'étanchéité 24 au niveau de l'autre extrémité axiale 222D du même logement traversant 222 et le corps 22 de la biellette porte un joint d'étanchéité 24 au niveau de l'extrémité axiale 224C du logement traversant 224 et un joint d'étanchéité 24 au niveau de l'autre extrémité axiale 224D du même logement traversant 224.

Lorsqu'il est porté par le corps 22, chaque joint d'étanchéité 24 entoure l'axe central B222 et est centré sur l'axe B222.

La surface radiale interne 222A est délimitée axialement par les deux chambres 226. La surface radiale interne 222A est disposée axialement entre les deux joints 24.

Chaque joint d'étanchéité 24 présente un corps en élastomère 242 complètement reçu dans la chambre 226 correspondante et une lèvre 244 monobloc avec le corps 242 et qui s'étend radialement en direction de l'axe B222, au-delà de la surface radiale interne 222A, à l'état libre du joint d'étanchéité 24, c'est-à-dire lorsqu'aucun matériel n'est reçu dans le logement 222. En configuration montée d'un joint 24 dans une chambre 226, le corps 242 et la lèvre 244 ont des géométries de révolution autour de l'axe B222. Le joint 24 comprend également une armature métallique de rigidification 246 et un ressort 248 qui sont facultatifs, le ressort 248 étant disposé axialement entre la paroi annulaire 226A et l'armature de rigidification 246. Le diamètre externe du corps 242 du joint 24 est strictement supérieur au diamètre interne d222.

Compte tenu de la géométrie des chambres 226, il est possible d'insérer un joint 24 dans chacune de ces chambres par une translation axiale parallèle à l'axe B222, ce qui est commode en termes de fabrication et, éventuellement, de maintenance. Cette commodité provient du fait que chaque chambre 226 débouche sur un côté 221 ou 223 du corps 22 sur toute son épaisseur radiale e226.

Le logement 224 est également défini par une surface périphérique interne à section circulaire 224A disposée axialement entre deux chambres 226 et entre les deux joints 24 et qui comprend trois rainures axiales 224B. Il est également entouré, au niveau de ses extrémités axiales 224C et 224D, par les deux chambres 226 dans chacune desquelles est logé un joint 24. Les joints 24 associés au logement 224 ont la même géométrie que les joints 24 décrits pour le logement 222.

En configuration montée d'un joint 24 dans une chambre 226, ce joint ne dépasse pas axialement de la chambre 226, au-delà du côté 221 ou 223 adjacent du corps 22. La longueur axiale L24 d'un joint 24 selon l'axe B222 ou B224 est strictement inférieure à la longueur axiale L226 d'une chambre 226 selon cet axe. Le joint 24 est de préférence en contact avec la paroi annulaire 226A.

Autour de chaque logement 222 ou 224 et sur chacun des côtés 221 et 223, vingt-quatre cavités 228 sont réparties autour de l'axe B222 ou B224, en étant disposées sur deux cercles concentriques C228, C'228 de rayons différents et centré sur l'axe B222 ou B224 selon le cas. En pratique, douze cavités 228 peuvent être prévues sur le cercle C228 et douze autres cavités 228 sur le cercle C'228, les cavités disposées sur les deux cercles étant décalées angulairement les unes des autres autour de l'axe B222 ou B224. En d'autres termes, les cavités 228 sont disposées en quinconce sur les deux cercles C228 et C'228, de chaque côté des logements 222 et 224.

En variante, le nombre et la répartition des cavités 228 peuvent être différents.

En configuration montée de la biellette 20 dans la mécanique Jacquard 2, un arbre de palier 30 est en place dans chacun des logements 222 et 224.

Les deux arbres de palier 30 sont identiques et l'on décrit principalement dans ce qui suit l'arbre de palier reçu dans le logement 222.

Cet arbre de palier est une pièce monobloc en métal ou en céramique, cylindrique à section circulaire, percée d'un alésage central 302 permettant le passage d'une vis 40.

On note B30 un axe longitudinal de l'arbre de palier 30, D30 son diamètre extérieur et L30 sa longueur axiale mesurée parallèlement à cet axe.

En configuration montée de l'arbre de palier 30 dans le logement 222, les axes B30 et B222 sont confondus et constituent des axes d'articulation entre les pièces 20 et 30.

La longueur L30 est supérieure à la longueur L222 et l'arbre de palier 30 est centré dans le logement L222, le long de l'axe B222. Ainsi, en configuration montée de l'arbre de palier 30 dans le logement 222, l'arbre de palier 30 dépasse axialement du logement 222 au niveau des deux côtés 221 et 223, avec le même dépassement.

L'arbre de palier 30 présente une surface périphérique externe 304 avec une partie cylindrique de diamètre D30. Ce diamètre D30 est légèrement inférieur au diamètre d222 de la surface 222A. En pratique, la différence entre les diamètres D30 et d222 est de quelques dixièmes ou centièmes de millimètres de manière à permettre le pivotement de l'arbre de palier 30 dans la biellette 20 autour de l'axe B222 avec un bon guidage radial de l'arbre de palier 30 dans le corps 22.

Une gorge 306 annulaire périphérique est ménagée dans la surface périphérique externe 304, à mi-distance entre les extrémités axiales de l'arbre de palier 30. Ainsi, en configuration montée de l'arbre de palier 30 dans le logement 222, l'axe A22 traverse la gorge 306 et la gorge 306 est disposée axialement entre les deux joints 24.

En configuration montée de la biellette 20 dans la mécanique Jacquard 2, l'extrémité 202 de la biellette 20 est reçue entre les deux flasques 74 de la barre oblique 7 et l'alésage central 302 de l'arbre de palier 30 est aligné avec un perçage 742 ménagé dans l'un des flasques 74 et un taraudage 744 ménagé dans l'autre flasque 74.

Il est ainsi possible d'insérer la vis 40 à travers le perçage 742 et l'alésage 302 pour la visser et la serrer dans le taraudage 744 jusqu' à ce qu'une tête 44 de la vis 40 vienne en appui contre le flasque 74 avec perçage 742, ce qui permet de solidariser l'arbre de palier 30 avec les deux flasques 74 de la barre d'entraînement 7 en translation le long de l'axe B30 et en rotation autour de l'axe B30.

De la même façon, en configuration montée de la biellette 20 dans la mécanique Jacquard 2, son extrémité 204 est insérée entre deux flasques 124 d'une lame 12, chacun de ces flasques étant pourvu d'un perçage 1242 de passage d'une vis 50 associée à un écrou 52. Lors du montage, l'alésage central 302 de l'arbre de palier 30 disposé dans le logement traversant 224 est aligné avec les perçages 1242, ce qui permet de mettre en place la vis 50 qui traverse les flasques 124 de part en part et dépasse suffisamment pour mettre en place l'écrou 52 sur la tige taraudée de la vis 50, à l'opposé de sa tête 54.

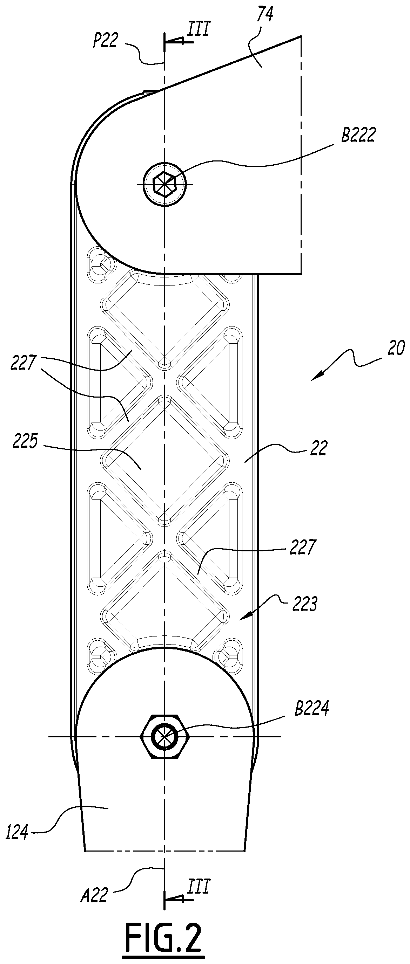

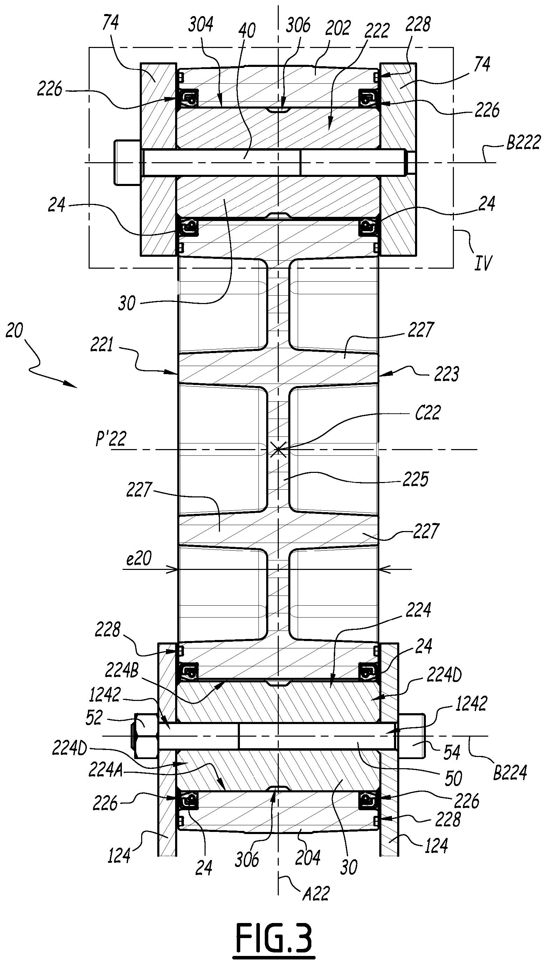

On est alors dans la configuration des figures 2 à 4 où les lèvres 244 des joints 24 viennent en appui contre la surface périphérique externe 304 de chacun des arbres de palier 30. Au niveau de chaque logement traversant 222, 224, autour de l'axe B222, B224, un volume V20 interne est délimité, axialement, entre les deux joints 24 et, radialement, entre les surfaces 222A ou 224A et 304. Avec les deux joints 24 en contact avec le corps 20 et avec l'arbre de palier 30 sur toute leur circonférence, le volume V20 est fermé et confine de manière étanche un lubrifiant de l'articulation formée entre les pièces 7 et 20, d'une part, ou entre les pièces 12 et 20, d'autre part.

Ce lubrifiant peut être une graisse fabriquée à base de savons métalliques dispersés dans une huile minérale ou synthétique. De préférence, cette graisse est choisie avec une viscosité élevée et adhérente aux surfaces avec lesquelles elle est en contact.

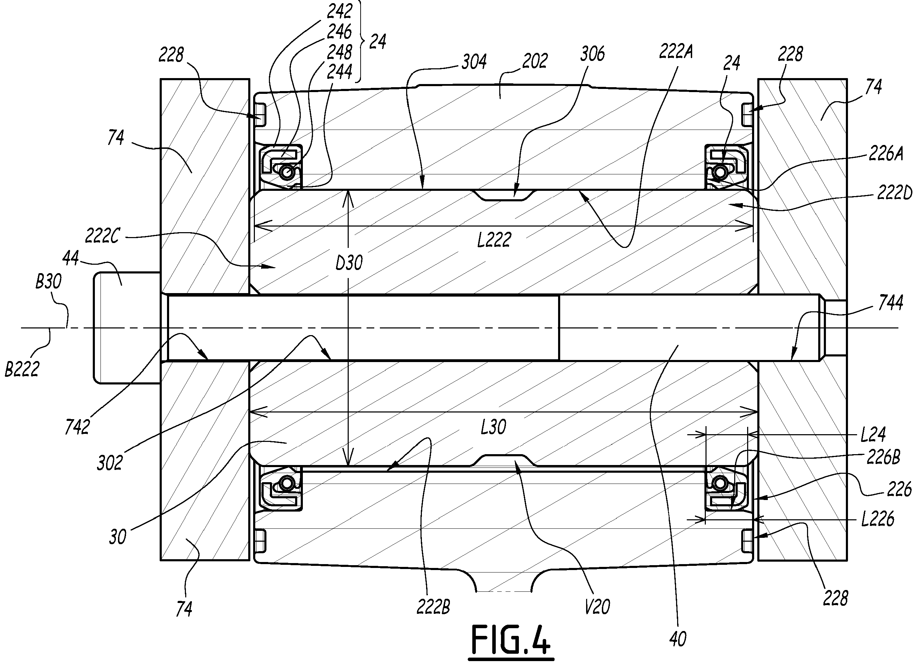

Le volume interne V20 est représenté en grisé à la figure 4.

L'assemblage de la biellette 20 et son incorporation dans la mécanique Jacquard 2 a lieu de la façon suivante. Préalablement au montage de la biellette 20 avec la barre d'entraînement associée 7 et avec la lame associée 12, les deux joints d'étanchéité 24 associés à chaque logement traversant 222 ou 224 sont engagés dans leur chambre 226 respective, à travers le débouché de cette chambre dans le côté 221 ou 223 du corps 22. Dans cette configuration libre des joints 24 dans laquelle chaque joint 24 est monté dans son chambre 226, alors qu'aucun arbre de palier 30 n'est monté dans le logement traversant 222 ou 224, sur toute sa circonférence, la lèvre 244 de chaque joint d'étanchéité 24 dépasse radialement vers l'intérieur, en direction de l'axe B222 ou B224, par rapport à la surface radiale interne 222A ou 224A du logement traversant 222 ou 224 adjacent à ce joint. Autrement dit, en configuration libre du joint 24, le diamètre interne minimal d24 du joint 24 est inférieur au diamètre interne d222 de la partie médiane cylindrique de la surface 222A ou 224A du logement traversant 222 ou 224. Le diamètre interne minimal d24 du joint 24 est défini au niveau de la lèvre 244. Ceci permet notamment d'assurer un bon contact du joint 24 avec la surface radiale externe 304 de l'arbre de palier 30 lorsque celui-ci est en place dans le logement 222 ou 224. Par ailleurs, chaque joint 24 est en retrait du côté 221 ou 223 de la biellette 20 dans laquelle débouche son chambre 226.

Ensuite, la surface radiale interne 222A ou 224A du logement traversant 222 ou 224 est enduite de graisse. A cette occasion, les rainures axiales 222B et 224B sont remplies de graisse.

Chaque arbre de palier 30 est ensuite enduit de graisse au niveau de sa surface radiale externe 304. En particulier, sa gorge annulaire 306 est remplie de graisse.

Un arbre de palier 30 est alors engagé dans chaque logement traversant 222 ou 224. L'excédent de graisse présent sur l'arbre de palier est retenu à l'extérieur du volume V20 par le joint 24 situé à l'extrémité axiale du logement traversant par lequel l'arbre de palier pénètre dans le logement.

L'excédent de graisse peut être réparti dans les cavités 228 disposées autour du logement 222 ou 224 et de ses chambres 226.

La biellette 20 est alors en configuration montée des arbres paliers 30 dans les logements traversants 222 et 224 où les deux joints d'étanchéité 24 adjacents à chaque logement traversant sont interposés, radialement, entre le corps 22 de la biellette 20 et l'arbre de palier 30 engagé dans ce logement.

La biellette équipée des joints d'étanchéité 24 et des arbres de palier 30 est ensuite placée entre les flasques 74 de la barre d'entraînement 7, de façon à mettre en place la vis 40 et à la serrer dans le taraudage 744. L'arbre de palier 30 reçu dans le logement traversant 222 est ainsi solidarisé avec les flasques 74. Dans cette configuration, les flasques 74 recouvrent les cavités 228. En d'autres termes, les flasques 74 sont en vis-à-vis selon l'axe B222 de toutes les cavités 228, sur toute leur étendue. La quantité de graisse présente dans ces cavités 228 permet de réduire le frottement et l'usure entre les flasques 74 et les côtés 221, 223 en mouvement l'un par rapport à l'autre en cours de tissage.

Le montage de la biellette 20 sur la lame 12 s'effectue de la même façon. Il peut avoir lieu avant ou après le montage de la biellette 20 sur la barre d'entrainement 7. Il est opéré en introduisant l'arbre de palier 30 du logement 224 entre les flasques 124 de la lame 12, en insérant la vis 50 dans les perçages 1242 et dans l'alésage 302 et en serrant l'écrou 52 sur cette vis 50, la tête de vis 54 et l'écrou 52 prenant en sandwich les flasques 124 et l'arbre de palier 30. Dans ce cas également, les cavités 228 ménagées autour du logement traversant 224 sont recouvertes par les flasques 124 de la lame 12.

Les axes B222 et B224 sont alors parallèles à la direction longitudinale des lames 12, 14.

En fonctionnement, l'arbre palier 30 reçu dans le logement 222 est maintenu solidaire par adhérence avec les flasques 74, sous l'effet de l'effort axial exercé par la vis 40. De même, l'arbre palier 30 reçu dans le logement traversant 224 est maintenu solidaire des flasques 124 par adhérence sous l'effet de l'effort exercé entre la tête 54 de la vis 50 et l'écrou 52. L'arbre de palier 30 est solidaire des deux flasques 124 en translation le long de l'axe B30 et en rotation autour de l'axe B30.

En fonctionnement, les flasques 74 ou 124 sont maintenus à distance des joints 24 par les arbres de palier 30 qui dépassent de part et d'autre de la biellette 20, du fait de la différence entre les longueurs L30 et L222. Ainsi, il n'est pas exercé de frottement axial par les flasques 74 ou 124 sur les joints 24.

La réserve de graisse constituée au sein du volume V20 contribue à la lubrification de l'articulation en rotation entre la biellette 20 et la barre d'entraînement 7 ou entre cette biellette et la lame 12, ce qui limite l'échauffement à l'interface entre les surfaces 222A et 304 ou 224A et 304 en mouvement l'une par rapport à l'autre en cours de tissage.

Cette réserve de graisse est isolée de l'extérieur par les deux joints d'étanchéité 24 qui ferment de façon étanche les extrémités axiales du volume V20. La graisse est ainsi maintenue entre le corps 22 de la biellette 20 et chaque arbre palier 30 et assure une lubrification efficace et de longue durée, qui exige peu de maintenance, voire pas de maintenance du tout. Comme chaque joint 24 est disposé au niveau d'une extrémité axiale 222C, 222D du logement traversant 222, 224, la dimension axiale du volume V20 est maximale pour une réserve maximale de graisse. En outre, les joints 24 empêchent la pollution extérieure d'entrer dans le volume V20, ce qui limite les risques de contamination et d'usure prématurée des surfaces 222A, 224A et 304.

La graisse disposée dans les rainures 222B et 224B, d'une part, et dans les gorges 306, d'autre part, constitue une réserve de lubrifiant qui prolonge la durée de vie de l'articulation. La graisse disposée dans ces rainures et gorges n'est pas raclée par les joints 24 lors de la mise en place des arbres de palier 30 dans les logements traversants 222 et 224. Cette graisse, présente au départ dans ces rainures et gorges, peut migrer vers le reste du volume V20 en cours d'utilisation de la biellette 20, en particulier vers l'interface entre les parties médianes cylindriques des surfaces 222A et 304 ou 224A et 304.

Le corps 22 étant en polymère, de préférence en matériau plastique injecté, sa géométrie peut être optimisée, notamment au niveau des logements traversants 222 et 224 pour former les surfaces 222A et 224A et les rainures 222B et 224B, ceci avec un coût bien maîtrisé. Une réalisation par moulage de matériau plastique injecté permet également de créer l'âme 225 et les nervures 227, ce qui permet de réduire la masse de la biellette 20 et de diminuer son coût-matière.

Le recours à un joint d'étanchéité 24 avec au moins une lèvre 244 optimise le contact du joint 24 avec l'arbre de palier 30 malgré les éventuels mouvements de l'arbre de palier 30 transversaux à l'axe B222, B224 dans le logement traversant 222, 224.

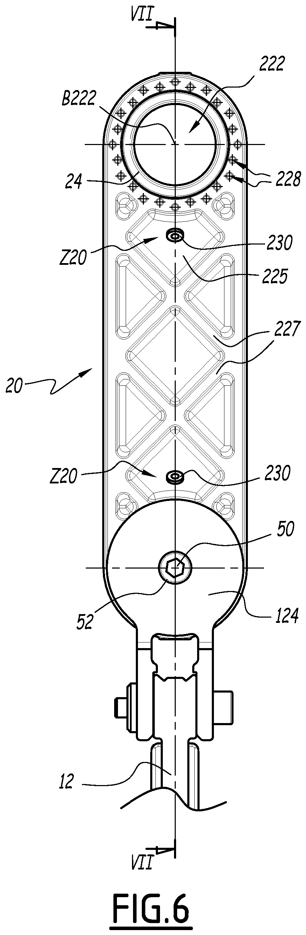

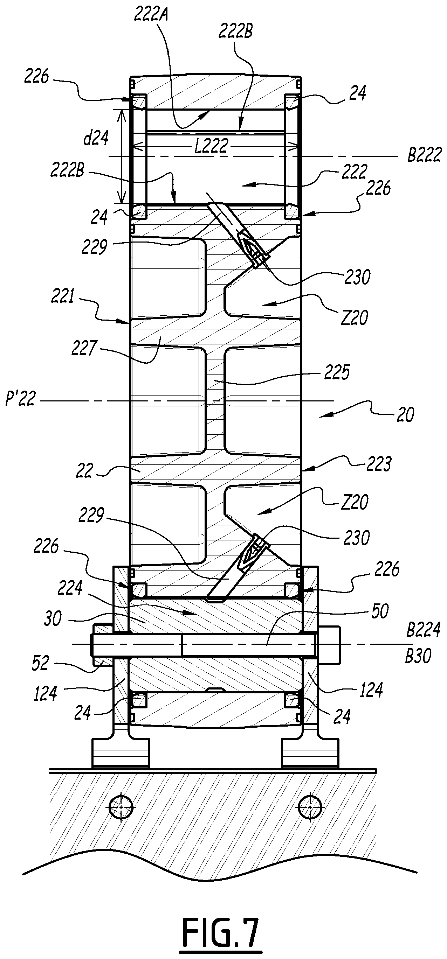

Dans le deuxième mode de réalisation de l'invention représenté aux figures 6 et 7, les éléments analogues à ceux du premier mode de réalisation portent les mêmes références. Dans ce qui suit, on décrit principalement ce qui distingue ce deuxième mode de réalisation du précédent.

Dans ce mode de réalisation, les joints sont des joints en élastomère dont le diamètre de tore est tel qu'ils dépassent radialement vers l'intérieur du logement 222 ou 224 lorsqu'ils sont disposés dans une chambre 226 définie comme dans le premier mode de réalisation.

Les joints 24 sont obtenus directement par bi-injection avec le corps 22 de biellette 20 ou par surmoulage dans les chambres 226, ce qui assure un ancrage pérenne de chaque joint 24 sur le corps 22 de la biellette 20. Chaque joint 24 est réalisé dans une matière différente de celle du corps 22 de la biellette 20, plus élastique, ces joints et ce corps étant formés par injection de deux matières polymères différentes, lors de deux opérations simultanées ou successives d'injection. Les joints 24 ne sont alors pas démontables et forment une seule pièce monobloc avec le corps 22.

Toutefois, en variante, il est possible de prévoir que des joints toriques ou sans lèvre, en élastomère, fabriqués à part, soient rapportés dans les chambres 226, en étant inséré dans ces chambres par translation axiale, comme les joints du premier mode de réalisation.

En outre, dans ce mode de réalisation, un passage 229 est ménagé dans le corps 22 pour relier chaque logement traversant 222 ou 224 avec l'extérieur du corps 22. Il est donc prévu deux passages 229 qui débouchent respectivement, au niveau de la surface 222A ou 224A dans un logement 222 ou 224. Un passage 229 débouche dans le logement 222, 224, et donc dans le volume V20, transversalement à l'axe central B222, B224 du logement 222, 224. Chacun des deux passages 229 s'étend jusqu'à l'extérieur de la biellette 20, dans une zone externe Z20 définie entre l'âme 225 et deux nervures 227 et débouchant sur le côté 221 ou 223. Chaque passage 229 est obturé par un bouchon 230 qui n'est retiré que lorsqu'il convient de garnir ou regarnir le volume V20 en lubrifiant, tout particulièrement en graisse, du type de la graisse mentionnée ci-dessus pour le premier mode de réalisation.

En variante non représentée, le bouchon est un embout de graissage avec un clapet et n'est alors pas retiré de la biellette 20 pour le graissage.

En configuration assemblée de la biellette 20 et des arbres de palier 30, chaque passage 229 débouche dans le logement 222 ou 224 entre les deux joints 24, précisément dans le volume V20 défini à l'intérieur du logement traversant 222 ou 224, en regard de la gorge périphérique 306 qui est ainsi facilement remplie ou re-remplie, même avec une graisse relativement visqueuse.

De préférence, les zones Z20 des bielles 20 sont situées sur le côté 223 de la biellette 20, c'est-à-dire le côté de ces bielles tourné vers l'extérieur de la mécanique Jacquard 2 en configuration montée de la bielle. Ceci facilite l'accès au bouchon 230 et l'introduction de graisse dans les passages 229 lorsqu'il convient de regarnir les volumes V20 en lubrifiant, alors que la biellette est déjà en place dans la mécanique Jacquard 2.

Dans ce mode de réalisation, la biellette reste symétrique par rapport au plan médian P'22 mais pas par rapport au point d'intersection C22 définis comme dans le premier mode de réalisation.

Lorsque les joints d'étanchéité à lèvres sont utilisés, comme dans le premier mode de réalisation, ceux-ci peuvent, en variante, comprendre plusieurs lèvres.

Quel que soit le mode de réalisation, plusieurs gorges annulaires périphériques du type des gorges 306, peuvent être prévues sur l'arbre de palier 30, ces différentes gorges étant réparties entre les deux joints 24.

Quel que soit le mode de réalisation, les rainures 222B ou 224B peuvent être prévues sous la forme de rainures annulaires périphériques ou en hélice sur la surface radiale interne 222A ou 224A du logement traversant 222 ou 224.

Selon une variante non représentée de l'invention applicable à tous les modes de réalisation, seule une articulation sur la biellette peut être prévue avec un arbre de palier et un logement traversant. Dans ce cas, il s'agit, de préférence, de l'articulation entre la barre d'entraînement 7 ou 9 et la biellette 20. L'articulation entre la biellette 20 et une lame 12 ou 14 peut alors être réalisée par vissage de la lame sur la biellette.

Quel que soit le mode de réalisation, l'un ou chacun des joints d'étanchéité 24 disposés à chaque extrémité axiale d'un logement d'articulation peut comprendre plusieurs corps tels que le corps 242. Dans ce cas, ces corps sont disposés côte à côte selon une direction parallèle à l'axe B222 ou B224 et la longueur axiale des chambres 226 est adaptée.

## Revendications

1. Biellette (20) de liaison entre une lame (12, 14) de support de crochets mobiles et une barre d'entraînement (7, 9) d'une mécanique Jacquard (2), la biellette comprenant un corps (22) pourvu d'au moins un logement traversant (222, 224) pour la réception d'un arbre de palier (30) avec possibilité de pivotement relatif autour d'un axe central (B222, B224) du logement traversant (222, 224), le logement traversant (222, 224) s'étendant, le long de son axe central (B222, B224), entre une première extrémité axiale (222C, 224C) et une deuxième extrémité axiale (222D, 224D), **caractérisée en ce que** le corps (22) de la biellette porte un premier joint d'étanchéité (24) au niveau de la première extrémité axiale (222C, 224C) du logement traversant (222, 224) et un deuxième joint d'étanchéité (24) au niveau de la deuxième extrémité axiale (222D, 224D) du même logement traversant.

2. Biellette selon la revendication 1, **caractérisée en ce que** le corps (22) de la biellette (20) est en matériau polymère, de préférence en matériau thermoplastique.

3. Biellette selon la revendication 2, **caractérisée en ce que** chaque joint d'étanchéité (24) est surmoulé sur, ou monobloc avec, le corps (22) de la biellette (20).

4. Biellette selon l'une des revendications précédentes, **caractérisée en ce que** chaque joint d'étanchéité (24) comprend au moins une lèvre (244) et **en ce que**, à l'état libre du joint d'étanchéité (24) porté par le corps (22) de la biellette (20), la lèvre (244) dépasse radialement en direction de l'axe central (B222, B224) par rapport à une surface radiale interne (222A, 224A) du logement traversant (222,224).

5. Biellette selon l'une des revendications précédentes, **caractérisée en ce que** chaque joint d'étanchéité (24) présente, à l'état libre porté par le corps (22) de la biellette (20), un diamètre interne minimal (d24) inférieur au diamètre interne (d222) du logement traversant (222, 224).

6. Biellette selon l'une des revendications précédentes, **caractérisée en ce qu'**au moins une rainure (222B, 224B) de réception d'un lubrifiant, de préférence trois rainures axiales régulièrement réparties autour de l'axe central (B222, B224) du logement traversant, sont ménagées dans le corps (20) sur une surface radiale interne (222A, 224A) du logement traversant (222, 224).

7. Biellette selon l'une des revendications précédentes, **caractérisée en ce que** chaque joint d'étanchéité (24) est reçu dans une chambre (226) ménagée dans le corps (22) de la biellette (20), autour du logement traversant, et qui débouche, radialement à l'axe central (B222, B224), dans le logement traversant (222, 224) et axialement, sur un côté (221, 223) du corps sur toute l'épaisseur radiale (e226) de la chambre (226).

8. Biellette selon la revendication 7, **caractérisée en ce que**, selon l'axe central (B222, B224), la longueur (L24) du joint d'étanchéité (24) est strictement inférieure à la longueur (L226) de la chambre (226).

9. Biellette selon l'une des revendications précédentes, **caractérisée en ce que** plusieurs cavités (228) sont ménagées sur chaque côté (221, 223) du corps (22) de la biellette (20) perpendiculaire à l'axe central (B222, B224) du logement traversant (222, 224) et sont réparties autour du logement traversant (222, 224).

10. Biellette selon l'une des revendications précédentes, **caractérisée en ce que** le corps (22) de la biellette (20) est pourvu de deux logements traversants (222, 224) de réception chacun d'un arbre de palier (30) et dont les axes centraux (B222, B224) sont parallèles, un logement traversant étant ménagé à chaque extrémité longitudinale (202, 204) du corps de la biellette, et **en ce que** le corps (22) est symétrique par rapport à un plan médian (P'22) qui est situé à égale distance des deux axes centraux (B222, B224) et qui est perpendiculaire à un plan longitudinal (P22) incluant les deux axes centraux.

11. Biellette selon l'une des revendications précédentes, **caractérisée en ce que** le corps (22) de la biellette (20) définit un passage (229) s'étendant depuis le logement traversant (222, 224) jusqu'à une zone externe (Z20) du corps de la biellette, ce passage débouchant dans le logement traversant (222, 224) transversalement à son axe central (B222, B224) au niveau d'une surface radiale interne (222A, 224A) du logement traversant disposée axialement entre les deux joints d'étanchéité (24).

12. Mécanique Jacquard (2) comprenant des barres d'entraînement (7, 9) et des lames (12, 14) de support de crochets mobiles appartenant à la mécanique Jacquard, les lames étant liées aux barres d'entraînement par des biellettes (20), **caractérisée en ce que** l'une au moins des biellettes (20) est selon l'une des revendications précédentes, **en ce que** chaque logement traversant (222, 224) de la biellette reçoit un arbre de palier (30) solidaire d'une pièce parmi une barre d'entraînement (7, 9) et une lame (12, 14), cette pièce comprenant deux flasques (74, 94, 124, 144), **en ce que** le logement traversant de la biellette est disposé entre ces deux flasques et **en ce que** chaque joint d'étanchéité (24) disposé au niveau de chaque extrémité axiale (222C, 222D, 224C, 224D) du logement traversant est interposé entre l'arbre de palier (30) et le corps (22) de la biellette (20).

13. Mécanique Jacquard selon la revendication 12, **caractérisée en ce qu'**au niveau de chaque logement traversant (222, 224), un volume (V20) fermé de lubrifiant est délimité axialement entre les deux joints d'étanchéité (24), et radialement entre une surface radiale interne (222A, 224A) du logement traversant (222, 224) et une surface radiale externe (304) de l'arbre de palier (30).

14. Mécanique Jacquard selon la revendication 12 ou 13, **caractérisée en ce qu'**une surface radiale externe (304) de l'arbre de palier (30) est pourvue d'au moins une gorge (306) de réception d'un lubrifiant disposée axialement entre les deux joints d'étanchéité (24).

15. Mécanique Jacquard selon l'une des revendications 12 à 14, **caractérisée en ce que** la biellette (20) est selon la revendication 9 et **en ce que** les flasques recouvrent les cavités (228).

## Patentansprüche

1. Gestänge (20) zum Verbinden einer Lamelle (12, 14) zum Tragen beweglicher Haken und einer Antriebsstange (7, 9) eines Jacquard-Mechanismus (2), die Gestänge umfassend einen Körper (22), das mit mindestens einer durchgehenden Aufnahme (222, 224) zum Aufnehmen einer Lagerwelle (30) mit Möglichkeit eines relativen Schwenkens um eine Mittelachse (B222, B224) der durchgehenden Aufnahme (222, 224) aufweist, wobei sich die durchgehende Aufnahme (222, 224) entlang seiner Mittelachse (B222, B224) zwischen einem ersten axialen Ende (222C, 224C) und einem zweiten axialen Ende (222D, 224D) erstreckt, **dadurch gekennzeichnet, dass** der Körper (22) des Gestänges eine erste Dichtung (24) an dem ersten axialen Ende (222C, 224C) der durchgehenden Aufnahme (222, 224) und eine zweite Dichtung (24) an dem zweiten axialen Ende (222D, 224D) derselben durchgehenden Aufnahme trägt.

2. Gestänge nach Anspruch 1, **dadurch gekennzeichnet, dass** der Körper (22) des Gestänges (20) aus polymerem Material, vorzugsweise aus thermoplastischem Material, ist.

3. Gestänge nach Anspruch 2, **dadurch gekennzeichnet, dass** jede Dichtung (24) an den Körper (22) des Gestänges (20) angeformt oder mit diesem einstückig ist.

4. Gestänge nach einem der vorherigen Ansprüche, **dadurch gekennzeichnet, dass** jede Dichtung (24) mindestens eine Lippe (244) aufweist und dass in dem freien Zustand der von dem Körper (22) des Gestänges (20) getragenen Dichtung (24) die Lippe (244) radial in Richtung der Mittelachse (B222, B224) in Bezug auf eine radiale Innenfläche (222A, 224A) der durchgehenden Aufnahme (222, 224) hervorsteht.

5. Gestänge nach einem der vorherigen Ansprüche, **dadurch gekennzeichnet, dass** jede Dichtung (24) in dem freien, von dem Körper (22) des Gestänges (20) getragenen Zustand einen minimalen Innendurchmesser (d24) aufweist, der kleiner ist als der Innendurchmesser (d222) der durchgehenden Aufnahme (222, 224).

6. Gestänge nach einem der vorherigen Ansprüche, **dadurch gekennzeichnet, dass** in dem Körper (20) an einer radialen Innenfläche (222A, 224A) der durchgehenden Aufnahme (222, 224) mindestens eine Nut (222B, 224B) zum Aufnehmen eines Schmiermittels, vorzugsweise drei gleichförmig um die Mittelachse (B222, B224) der der durchgehenden Aufnahme verteilte axiale Nuten, angeordnet sind.

7. Gestänge nach einem der vorherigen Ansprüche, **dadurch gekennzeichnet, dass** jede Dichtung (24) in einer Kammer (226) aufgenommen ist, die in dem Körper (22) des Gestänges (20) um die durchgehende Aufnahme angeordnet ist und die radial zu der Mittelachse (B222, B224) in die durchgehende Aufnahme (222, 224) und axial auf einer Seite (221, 223) des Körpers über die gesamte radiale Stärke (e226) der Kammer (226) mündet.

8. Gestänge nach Anspruch 7, **dadurch gekennzeichnet, dass** die Länge (L24) der Dichtung (24) entlang der Mittelachse (B222, B224) deutlich geringer ist als die Länge (L226) der Kammer (226).

9. Gestänge nach einem der vorherigen Ansprüche, **dadurch gekennzeichnet, dass** auf jeder Seite (221, 223) des Körpers (22) des Gestänges (20) senkrecht zu der Mittelachse (B222, B224) der durchgehenden Aufnahme (222, 224) eine Vielzahl von Hohlräumen (228) angeordnet sind, die um die durchgehende Aufnahme (222, 224) verteilt sind.

10. Gestänge nach einem der vorherigen Ansprüche, **dadurch gekennzeichnet, dass** der Körper (22) des Gestänges (20) mit zwei durchgehenden Aufnahmen (222, 224) zum Aufnehmen je einer Lagerwelle (30) versehen ist, deren Mittelachsen (B222, B224) parallel sind, wobei an jedem Längsende (202, 204) des Körpers des Gestänges eine durchgehende Aufnahme angeordnet ist, und dass der Körper (22) symmetrisch in Bezug auf eine mittlere Ebene (P'22) ist, die in gleichem Abstand von den zwei Mittelachsen (B222, B224) ist und die senkrecht zu einer die beiden Mittelachsen einschließenden Längsebene (P22) ist.

11. Gestänge nach einem der vorherigen Ansprüche, **dadurch gekennzeichnet, dass** der Körper (22) des Gestänges (20) einen Durchgang (229) definiert, der sich von der durchgehenden Aufnahme (222, 224) zu einem äußeren Bereich (Z20) des Körpers des Gestänges erstreckt, wobei dieser Durchgang quer zu seiner Mittelachse (B222, B224) auf Höhe einer radialen Innenfläche (222A, 224A) der durchgehenden Aufnahme, die axial zwischen den zwei Dichtungen (24) angeordnet ist, in die durchgehende Aufnahme (222, 224) mündet.

12. Jacquard-Mechanismus (2), umfassend Antriebsstangen (7, 9) und Lamellen (12, 14) zum Tragen von beweglichen Haken, die zu dem Jacquard-Mechanismus gehören, wobei die Lamellen durch Gestänge (20) mit den Antriebsstangen verbunden sind, **dadurch gekennzeichnet, dass** mindestens eines der Gestänge (20) nach einem der vorherigen Ansprüche ist, und dass jede durchgehende Aufnahme (222, 224) des Gestänges eine Lagerwelle (30) aufnimmt, die fest mit einer Antriebsstange (7, 9) und einer Lamelle (12, 14) verbunden ist, dieses Teil umfassend zwei Flansche (74, 94, 124, 144), dass die durchgehende Aufnahme des Gestänges zwischen diesen zwei Flanschen angeordnet ist und dass jede Dichtung (24), die an jedem axialen Ende (222C, 222D, 224C, 224D) der durchgehenden Aufnahme angeordnet ist, zwischen der Lagerwelle (30) und dem Körper (22) des Gestänges (20) angeordnet ist.

13. Jacquard-Mechanismus nach Anspruch 12, **dadurch gekennzeichnet, dass** an jeder durchgehenden Aufnahme (222, 224) ein geschlossenes Volumen (V20) von Schmiermittel axial zwischen den zwei Dichtungen (24) und radial zwischen einer radialen Innenfläche (222A, 224A) der durchgehenden Aufnahme (222, 224) und einer radialen Außenfläche (304) der Lagerwelle (30) begrenzt ist.

14. Jacquard-Mechanismus nach Anspruch 12 oder 13, **dadurch gekennzeichnet, dass** eine radiale Außenfläche (304) der Lagerwelle (30) mit mindestens einer Nut (306) zum Aufnehmen eines Schmiermittels versehen ist, die axial zwischen den zwei Dichtungen (24) angeordnet ist.

15. Jacquard-Mechanismus nach einem der Ansprüche 12 bis 14, **dadurch gekennzeichnet, dass** das Gestänge (20) nach Anspruch 9 ist und dass die Flansche die Hohlräume (228) abdecken.

## Claims

1. A connecting rod (20) between a blade (12, 14) supporting the moving hooks and a driving bar (7, 9) of a Jacquard mechanism (2), the connecting rod comprising a body (22) provided with at least one through housing (222, 244) for receiving a bearing shaft (30) with the possibility of relative pivoting about a central axis (B222, B224) of the through housing (222, 224), the through housing (222, 224) extending, along its central axis (B222, B224), between a first axial end (222C, 2224) and a second axial end (222D, 224D), **characterized in that** the body (22) of the connecting rod bears a first sealing gasket (24), at the first axial end (222C, 224C) of the through housing (222, 224), and a second sealing gasket (24), at the second axial end (222D, 224D) of the through housing.

2. The connecting rod according to claim 1, **characterized in that** the body (22) of the connecting rod (20) is made from a polymer material, preferably a thermoplastic material.

3. The connecting rod according to claim 2, **characterized in that** each sealing gasket (24) is overmolded on, or monobloc with, the body (22) of the connecting rod (20).

4. The connecting rod according to one of the preceding claims, **characterized in that** each sealing gasket (24) comprises at least one lip (244) and **in that**, in the free state of the sealing gasket (24) borne by the body (22) of the connecting rod (20), the lip (244) protrudes radially toward the central axis (B222, B224) relative to an inner radial surface (222A, 224A) of the through housing (222, 224).

5. The connecting rod according to one of the preceding claims, **characterized in that** each sealing gasket (24) has, in the free state borne by the body (22) of the connecting rod (20), a minimal inner diameter (d24) smaller than the inner diameter (d222) of the through housing (222, 224).

6. The connecting rod according to one of the preceding claims, **characterized in that** at least one slot (222B, 224B) for receiving a lubricant, preferably three axial slots evenly distributed around the central axis (B222, B224) of the through housing, are arranged in the body (20) on an inner radial surface (222A, 224A) of the through housing (222, 224).

7. The connecting rod according to one of the preceding claims, **characterized in that** each sealing gasket (24) is received in a chamber (226) arranged in the body (22) of the connecting rod (20), around the through housing, and which emerges radially with respect to the central axis (B222, B224), in the through housing (222, 224), and axially, on one side (221, 223) of this body over the entire radial thickness (e226) of the chamber (226).

8. The connecting rod according to claim 7, **characterized in that**, along the central axis (B222, B224), the length (L24) of the sealing gasket (24) is strictly less than the length (L226) of the chamber (226).

9. The connecting rod according to one of the preceding claims, **characterized in that** several cavities (228) are arranged on each side (221, 223) of the body (22) of the connecting rod (20) perpendicular to the central axis (B222, B224) of the through housing (222, 224) and evenly around the through housing (222, 224).

10. The connecting rod according to one of the preceding claims, **characterized in that** the body (22) of the connecting rod (20) is provided with two through housings (222, 224) each receiving a bearing shaft (30) and the central axes (B222, B224) of which are parallel, a through housing being arranged at each longitudinal end (202, 204) of the body of the connecting rod, and **in that** the body (22) being symmetrical relative to a median plane (P'22) that is located at equal distances from the two central axes (B222, B224) and that is perpendicular to a longitudinal plane (P22) including these two central axes.

11. The connecting rod according to one of the preceding claims, **characterized in that** the body (22) of the connecting rod (20) defines a passage (229) extending from the through housing (222, 224) to an outer zone (Z20) of the body of the connecting rod, this passage emerging in the through housing (222, 224), transversely to its central axis (B222, B224) at an inner radial surface (222A, 224A) of the through housing positioned axially between the two sealing gaskets (24).

12. A Jacquard mechanism (2) comprising driving bars (7, 9) and blades (12, 14) supporting moving hooks also belonging to the Jacquard mechanism, the blades being connected to the driving bars by connecting rods (20), **characterized in that** at least one of the connecting rods (20) is according to one of the preceding claims, **in that** each through housing (222, 224) of the connecting rod receives a bearing shaft (30) secured to a part among a driving bar (7, 9) and a blade (12, 14), this part comprising two flanges (74, 94, 124, 144), **in that** the through housing of the connecting rod is positioned between these two flanges and **in that** each sealing gasket (24) positioned at each axial end (222C, 222D, 224C, 224D) of the through housing is inserted between the bearing shaft (30) and the body (22) of the connecting rod (20).

13. The Jacquard mechanism according to claim 12, **characterized in that** at each through housing (222, 224), a closed lubricant volume (V20) is delimited axially between the two sealing gaskets (24), and radially between an inner radial surface (222A, 224A) of the through housing (222, 224) and an outer radial surface (304) of the bearing shaft (30).

14. The Jacquard mechanism according to claim 12 or 13, **characterized in that** an outer radial surface (304) of the bearing shaft (30) is provided with at least one groove (306) for receiving a lubricant positioned axially between the two sealing gaskets (24).

15. The Jacquard mechanism according to one of claims 12 to 14, **characterized in that** the connecting rod (20) is according to claim 9 and **in that** the flanges cover the cavities (228).
